# DEMANDE DE BREVET EUROPEEN

(11) **EP 0 527 718 A1**
(43) Date de publication de la demande: **17.02.1993**
(21) Numéro de dépôt: 92870120.0
(22) Date de dépôt: 12.08.1992
(51) Int. Cl.: C03B 25/06, F27D 23/00, F27D 7/04

(54) **Arche de recuisson**

(30) Priorité: 13.08.1991 BE 9100741
(71) Demandeur: "SOUDO-MECA", B-1600 Sint-Pieters-Leeuw (BE)
(72) Inventeur: Istas, Henri, B-1600 Sint-Pieters-Leeuw (BE)
(74) Mandataire: Claeys, Pierre

(57) **Abrégé**

Arche de recuisson comprenant plusieurs sections juxtaposées (2-1,2-2...) dont une section d'entrée (2-1) agencée pour recevoir des objets à recuire, en particulier des objets en verre, qui ont emmagasinés une quantité de chaleur. Ledit arche est pourvu de premiers moyens agencés pour prélever à l'intérieur d'une section d'entrée (2-1) de l'air chauffé à l'aide de ladite quantité de chaleur et l'amener, par une circulation forcée, vers au moins une autre section (2-2), une cloison d'entrée étant formée par des deuxièmes moyens agencés pour produire un courant d'air (15) circulant de haut en bas.

## Description

L'invention concerne une arche de recuisson comprenant plusieurs sections juxtaposées dont une section d'entrée pourvue d'une cloison d'entrée et agencée pour recevoir des objets à recuire, en particulier des objets en verre, qui ont emmagasinés une quantité de chaleur, ladite arche étant pourvue de premiers moyens agencés pour prélever à l'intérieur de la section d'entrée de la chaleur et l'amener, par une circulation forcée, vers au moins une autre section.

Une telle arche de recuisson est connue de la demande de brevet DOS 2.315.014. Après que le verre fondu ait quitté le four et qu'un objet en ait été soufflé, l'objet doit traverser une arche de recuisson afin d'achever la procédure de fabrication de l'objet. Cet objet est par exemple une bouteille, un bocal, un vase, ou tout autre objet en verre en céramique ou autre matière, nécessitant une opération de recuisson. La section d'entrée est immédiatement voisine du four et de la soufflerie d'où sortent les objets. Pour permettre une répartition adéquate de la chaleur à l'intérieur de l'arche et d'éviter ainsi des différences de températures trop importantes entre les différentes sections, des premiers moyens sont prévus pour faire circuler de la chaleur de l'une section à l'autre.

En effet, chaque arche de recuisson a une courbe de température établie en fonction des objets à recuire. Cette courbe va en décroissant à partir de la section d'entrée vers la sortie de l'arche. La section d'entrée est à une température sensiblement plus élevée que les autres sections. Ceci impose alors un chauffage des sections ultérieures pour maintenir une continuité dans la courbe.

Un problème de l'arche de recuisson connu est qu'elle est néanmoins sujette à des pertes d'énergie considérable non seulement à cause de la chaleur qui s'échappe vers l'environnement à partir de la cloison d'entrée, mais également à cause d'un excès de chauffage des autres sections. La porte, qui sert de cloison d'entrée, réduit certes déjà la perte de chaleur mais a pour inconvénient qu'elle obstrue la vue à travers l'arche. De plus, chaque fois qu'un objet tombe dans la section d'entrée de l'arche, il faut ouvrir la porte provoquant ainsi de grandes pertes de chaleur.

L'invention a pour but de réaliser une arche de recuisson dans laquelle les pertes d'énergie sont sensiblement réduites.

Une arche de recuisson suivant l'invention est caractérisée en ce que lesdits premiers moyens sont agencés pour prélever ladite chaleur sur ladite quantité de chaleur emmagasinée dans les objets à recuire, ladite cloison d'entrée étant formée par des deuxièmes moyens agencés pour produire un courant d'air circulant de haut en bas à l'entrée de ladite section d'entrée. En prélevant de la chaleur emmagasinée dans les objets introduits dans l'arche et en la forçant vers une autre section, on limite sensiblement la déperdition de chaleur vers l'environnement. De plus, en amenant la chaleur vers une autre section, on parvient à chauffer cette autre section par de la chaleur récupérée, limitant ainsi la consommation d'énergie. L'invention se base donc sur le fait que la mauvaise répartition de la chaleur à l'intérieur de l'arche est due au fait que trop de chaleur est présente dans la section d'entrée. L'utilisation d'un courant d'air à l'entrée et d'un prélèvement de chaleur à l'intérieur de la première section empêche la chaleur de fuir vers l'environnement et permet de plus de regarder à l'intérieur de l'arche et d'avoir accès à la section d'entrée sans pour autant causer des pertes de chaleur.

Il faut noter que le prélèvement de l'air chaud à l'entrée de l'arche est connu en tant que tel du brevet US PS 4.298.341. Toutefois, dans ce brevet américain, la chaleur ainsi prélevée circule dans une même section et n'est donc pas transmise vers une section voisine. De plus, il ne s'agit pas, dans ce brevet américain, de chaleur emmagasinée dans les objets introduits dans l'arche.

Une première forme de réalisation préférentielle d'une arche suivant l'invention dans laquelle les premiers moyens comportent un passage de la section d'entrée vers une section adjacente aménagé dans une partie supérieure de l'arche est caractérisée en ce que lesdits premiers moyens comprennent également au moins un ventilateur placé à hauteur dudit passage et agencé pour aspirer de l'air chauffé à l'aide de ladite chaleur prélevée et pour le faire circuler à travers ledit passage. On parvient ainsi à récupérer de la chaleur, sans trop perturber la circulation à l'intérieur de la section d'entrée. L'emploi d'un ventilateur est une façon simple et efficace pour imposer une circulation forcée.

Une deuxième forme de réalisation préférentielle d'une arche suivant l'invention est caractérisée en ce qu'une tôle de guidage est placée dans une partie frontale de ladite section en aval du passage, ladite tôle de guidage étant agencée pour guider l'air circulant dans ladite section adjacente vers l'endroit où ledit air chauffé est introduit. Ceci permet une canalisation de l'air chaud prélevé dans le flux d'air circulant dans ladite autre section, ainsi qu'un bon mélange de l'air chaud introduit avec l'air ambiant circulant dans cette autre section.

De préférence, ladite autre section est la section placée directement après la section d'entrée. Ceci limite les pertes de chaleur durant le transport.

Une troisième forme de réalisation préférentielle d'une arche suivant l'invention est caractérisée en ce que lesdits premiers moyens comportent un organe de mesure de la température relié audit ventilateur, ledit organe étant agencé pour contrôler la vitesse de rotation du ventilateur en fonction de la température mesurée. Le débit d'air chaud injecté dans l'autre section est ainsi réglé en fonction de la température par un simple contrôle de la vitesse de rotation du ventilateur.

Une quatrième forme de réalisation préférentielle d'une arche suivant l'invention est caractérisée en ce que lesdits premiers moyens comportent un organe de mesure de la température relié à des troisièmes moyens agencés pour faire varier la dimension dudit passage, ledit organe étant agencé pour modifier ladite dimension du passage en fonction de la tempéature mesurée. Le débit d'air chaud injecté dans l'autre section est ainsi réglé en fonction de la dimension du passage entre les sections.

L'invention sera maintenant décrite plus en détail à l'aide des dessins illustrant un exemple de réalisation d'une arche de recuisson. Dans les dessins :

La figure 1 montre une vue générale d'une arche de recuisson connue.

La figure 2 montre une coupe à travers une section d'une arche de recuisson.

La figure 3 illustre le prélèvement de chaleur et la conduite de celle-ci vers une autre section.

La figure 4 illustre une coupe à travers la section d'entrée.

Dans les dessins, une même référence est assignée aux mêmes éléments ou à des éléments analogues.

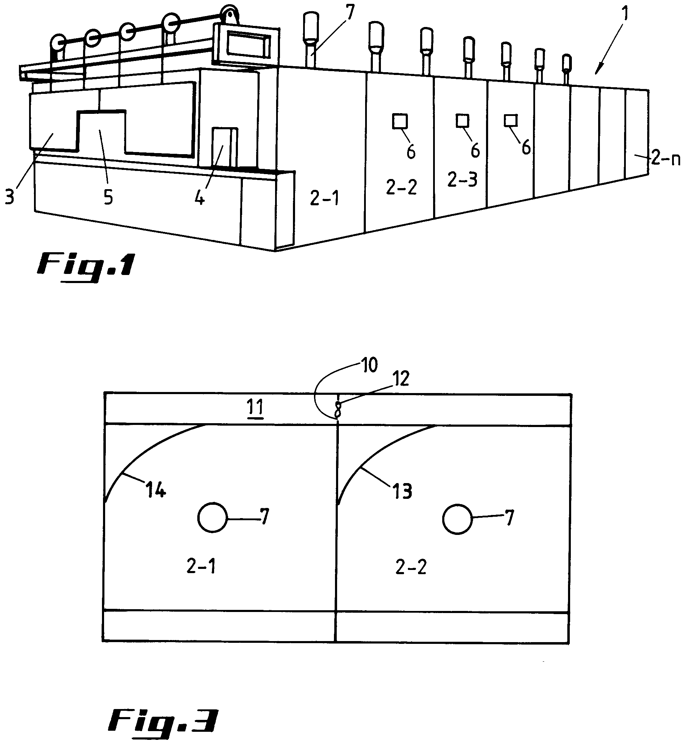

L'arche de recuisson 1 illustrée à la figure 1 comporte plusieurs sections 2-1, 2-2, ... 2-n juxtaposées. La section d'entrée 2-1 est pourvue d'une cloison 3 qui est pourvue d'une entrée latérale 4 et d'une entrée frontale 5. Certaines sections, par exemple les sections 2-2 à 2-(n-2) comportent chacune un élément de chauffage 6 permettant de maintenir la température à l'intérieur de la section correspondante à un niveau prédéterminé. En effet, afin de permettre une recuisson adéquate des objets introduits dans l'arche, il faut établir à l'intérieur de l'arche une courbe de température bien déterminée, qui va en décroissant à partir de la section d'entrée. La présence de ces éléments de chauffage permet de gérer la température dans chaque section.

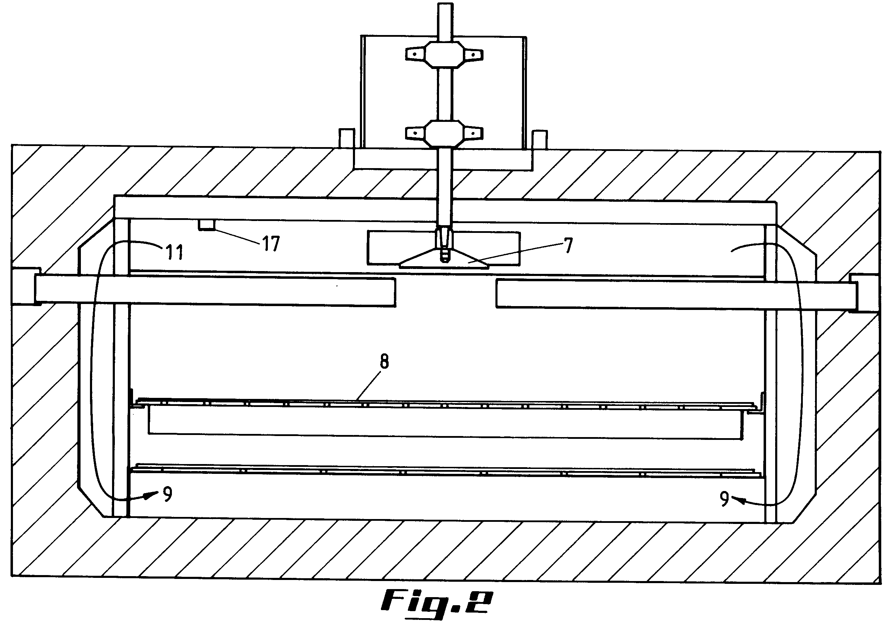

L'arche de recuisson comporte également une bande transporteuse 8, comme illustré à la figure 2, et servant au transport d'objets à recuire introduits par l'entrée 4 ou 5. La bande transporteuse s'étend à travers les différentes sections de l'arche, ce qui permet aux objets qui s'y trouvent disposés, de traverser les différentes sections de l'arche.

Chaque section comporte également un ventilateur 7 agencé pour faire circuler, suivant la direction indiquée par les flèches 9, à l'intérieur de la section, l'air chaud et permettre ainsi une bonne répartition de la chaleur et donc une recuisson uniforme. Le ventilateur aspire l'air chaud dans la partie supérieure de la section et le fait circuler vers le bas le long des parois latérales de la section.

La section d'entrée 2-1 ne comporte pas d'élément de chauffage. En effet, la chaleur emmagasinée dans les objets qui sortent du four est telle qu'une grande quantité de celle-ci s'échappe par radiation des objets et vient chauffer l'intérieur de la section d'entrée. On a toutefois constaté que le flux de chaleur qui quitte les objets est trop élevé, ce qui mène à une trop forte chaleur dans la section d'entrée et à une trop grande déperdition de chaleur vers l'environnement. De plus, la température trop élevée de la section d'entrée a pour conséquence qu'il faut chauffer davantage les sections avoisinantes afin de ne pas provoquer de discontinuité dans la courbe de température. Ceci implique un prolongement du temps de passage des objets dans l'arche et donc une arche plus longue pour arriver à une température ambiante normale en fin d'arche. Tout ceci résulte en des pertes d'énergie considérables et en des consommations excessives d'énergie.

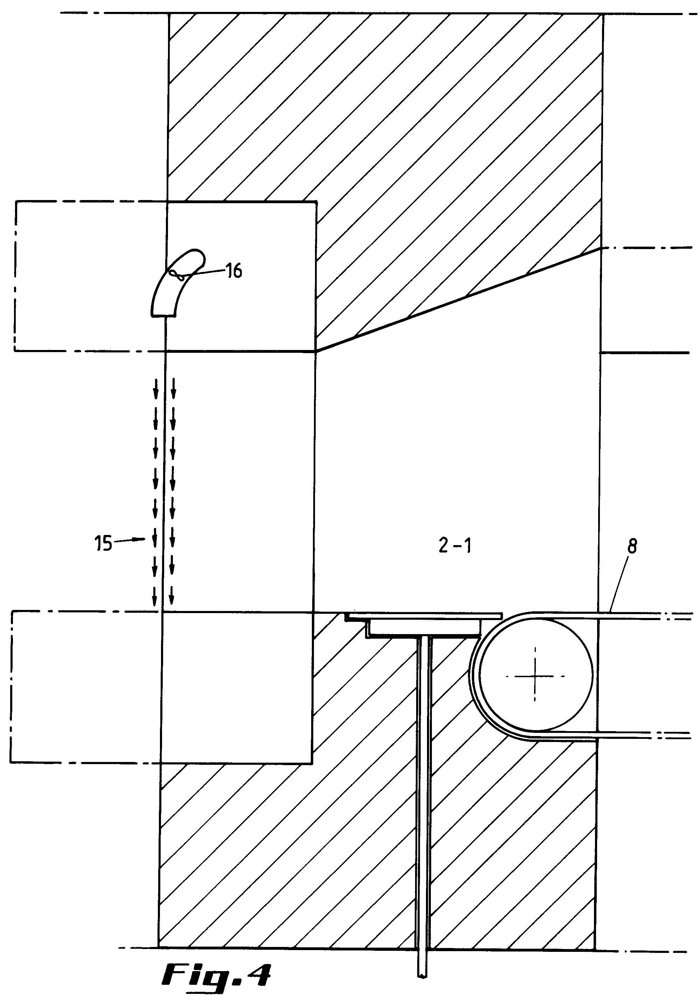

Pour résoudre ce problème, l'arche de recuisson suivant l'invention comporte, comme illustré à la figure 3, des premiers moyens pour prélever de l'air chaud à l'intérieur de la section d'entrée. Ces premiers moyens comportent un passage formé par une ouverture 10, agencée dans la partie supérieure 11 de la section d'entrée 2- 1, respectivement dans la section 2-2 adjacente à la section d'entrée. Ce passage se trouve à hauteur de la frontière entre les sections successives. Un deuxième ventilateur 12 est placé en aval ou en amont de l'ouverture 10 et est agencé pour aspirer de l'air chaud circulant dans la section d'entrée et à l'amener à travers l'ouverture 10 dans la section 2-2 pour qu'il puisse ainsi chauffer cette section. Pour empêcher que l'air chaud aspiré par le ventilateur 12 vienne perturber la circulation d'air à l'intérieur de la section 2-2, une tôle de guidage 13 est placée dans la section 2-2. Pour mieux canaliser l'air chaud circulant dans la section d'entrée vers l'ouverture 10, une autre tôle de guidage 14 est prévue à hauteur du plafond de la section d'entrée et en amont de l'ouverture 10.

L'air chaud qui circule à l'intérieur de la section d'entrée 2-1, entraîné par un premier ventilateur 7, est guidé par l'intermédiaire de la tôle 14 vers l'ouverture 10. Cet air chaud est alors aspiré par le ventilateur 12 et forcé à circuler à travers l'ouverture 10 où il sera ensuite injecté dans la section 2-2, où il viendra se mélanger à l'air circulant dans cette section. Ceci permet donc de transférer un excès de chaleur présent dans la section d'entrée 2-1 vers une section voisine. Grâce à ce transfert de chaleur, la température sera moins élevée dans la section 2-1, ce qui permettra également de moins chauffer les sections suivantes pour obtenir une courbe de température continue, ce qui procure une réduction sensible de la consommation d'énergie. Le transfert de la chaleur permet donc non seulement une récupération de la chaleur mais également une baisse de la consommation d'énergie. Par le jeu des tôles de guidage, le flux d'air injecté par les premiers moyens viendra se joindre à celui circulant dans la section voisine.

De préférence, la vitesse et donc la force de succion du deuxième ventilateur est réglable en fonction des dimensions des objets et/ou de la température régnant dans la section d'entrée. En effet, la chaleur emmagasinée par les objets varie en fonction de leurs dimensions, notamment l'épaisseur du verre et la grandeur des objets. En réglant la vitesse de rotation du deuxième ventilateur, on peut régler le débit d'air chaud aspiré en fonction de la chaleur dégagée par les objets. A côté d'un réglage de la vitesse l'on pourrait également envisager plusieurs ventilateurs qui seront enclenchés ou débranchés en fonction de la température. Un réglage du diamètre de l'ouverture 10 pourrait être également envisagé à cette fin. Pour permettre un réglage du débit d'air en fonction de la température de la section d'entrée, il est prévu un organe 17 de mesure de la température placé dans la partie supérieure 11 de la section d'entrée. Cet organe 17 est relié au ventilateur 12 à vitesse réglable et/ou à des troisièmes moyens permettant de faire varier la dimension de l'ouverture 10. Ces derniers moyens sont par exemple formés par un clapet réglable ou un diaphragme. En fonction de la température mesurée par l'organe 17 de la vitesse de rotation du ventilateur et/ou la dimension de l'ouverture 10 sera alors ajustée. Plus la température sera élevée, plus il y aura de chaleur à récupérer et donc plus vite le ventilateur 12 tournera et/ou plus grande sera l'ouverture.

Dans l'arche de recuisson suivant l'invention, la cloison d'entrée de la section d'entrée est de préférence formée par des deuxièmes moyens agencés pour produire un courant d'air 15 circulant de haut en bas, comme illustré à la figure 4. Ce courant d'air est par exemple produit par un troisième ventilateur 16 placé dans la partie supérieure à l'entrée de la section d'entrée. Du fait de son orientation vers le bas, le courant d'air qui forme pour ainsi dire un rideau empêche l'air chaud, circulant dans la section d'entrée, de s'échapper par cette ouverture. L'avantage d'utiliser un tel courant d'air est que, d'une part, il n'empêche pas l'entrée des objets et, d'autre part, il permet de regarder à l'intérieur de l'arche sans être gêné par la chaleur sortant de celle-ci. L'air chaud présent dans la section d'entrée 2-1 ne pourra donc pratiquement pas s'échapper du côté du rideau d'air 15 et l'air chaud sera donc récupéré et transmis vers une section voisine. Le rideau d'air 15 vient donc pour ainsi dire amplifier la récupération de chaleur en empêchant cette dernière de s'échapper par l'entrée de l'arche.

Le rideau d'air est de préférence réglable, par exemple à l'aide d'une clef permettant d'empêcher le rideau d'air de souffler sur une partie de l'entrée afin de permettre par exemple un enfournement manuel.

Il va de sois que, mis à part la circulation forcée d'air chaud de la section d'entrée 2-1 vers la section 2-2, une circulation vers d'autres sections peut également être envisagée. Ainsi il serait possible d'envoyer une fraction de la chaleur récupérée vers la section 2-2 et le reste vers la section 2-3.

## Revendications

1. Arche de recuisson comprenant plusieurs sections juxtaposées dont une section d'entrée pourvue d'une cloison d'entrée et agencée pour recevoir des objets à recuire, en particulier des objets en verre, qui ont emmagasinés une quantité de chaleur, ladite arche étant pourvue de premiers moyens agencés pour prélever à l'intérieur de la section d'entrée de la chaleur et l'amener, par une circulation forcée, vers au moins une autre section, caractérisée en ce que lesdits premiers moyens sont agencés pour prélever ladite chaleur sur ladite quantité de chaleur emmagasinée dans les objets à recuire, ladite cloison d'entrée étant formée par des deuxièmes moyens agencés pour produire un courant d'air circulant de haut en bas à l'entrée de ladite section d'entrée.

2. Arche de recuisson suivant la revendication 1, dans laquelle les premiers moyens comportent un passage de la section d'entrée vers une section adjacente aménagé dans une partie supérieure de l'arche, caractérisée en ce que lesdits premiers moyens comprennent également au moins un ventilateur placé à hauteur dudit passage et agencé pour aspirer de l'air chauffé à l'aide de ladite chaleur prélevée et pour le faire circuler à travers ledit passage.

3. Arche de recuisson suivant la revendication 2, caractérisée en ce qu'une tôle de guidage est placée dans une partie frontale de ladite section en aval dudit passage, ladite tôle de guidage étant agencée pour guider l'air circulant dans ladite section adjacente vers l'endroit où ledit air chauffé est introduit.

4. Arche de recuisson suivant l'une des revendications 1 à 3, caractérisée en ce que ladite autre section est la section placée directement après la section d'entrée.

5. Arche de recuisson suivant la revendication 2 ou 3, caractérisée en ce que lesdits premiers moyens comportent un organe de mesure de la température relié audit ventilateur, ledit organe étant agencé pour contrôler la vitesse de rotation du ventilateur en fonction de la température mesurée.

6. Arche de recuisson suivant la revendication 2 ou 3, caractérisée en ce que lesdits premiers moyens comportent un organe de mesure de la température relié à des troisièmes moyens agencés pour faire varier la dimension dudit passage, ledit organe étant agencé pour modifier ladite dimension du passage en fonction de la température mesurée.
